# EUROPÄISCHE PATENTSCHRIFT

(11) **EP 4 318 163 B1**
(45) Veröffentlichungstag und Bekanntmachung des Hinweises auf die Patenterteilung: **31.12.2025**
(21) Anmeldenummer: 23155860.2
(22) Anmeldetag: 09.02.2023
(51) Int. Cl.: G05D 1/698

(54) **AUTONOME LANDWIRTSCHAFTLICHE ARBEITSMASCHINE**
AUTONOMOUS AGRICULTURAL WORKING MACHINE
MACHINE AGRICOLE AUTONOME

(30) Priorität: 27.04.2022 DE 102022110132
(43) Veröffentlichungstag der Anmeldung: 07.02.2024
(73) Patentinhaber: CLAAS E-Systems GmbH, 49201 Dissen (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Dr., Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(56) Entgegenhaltungen:
- EP-A1- 4 268 560
- US-A1- 2017 192 431
- US-A1- 2020 159 220

## Beschreibung

Die Erfindung betrifft ein auf elektronischem Datenaustausch basierendes Assistenzsystem zur Befähigung eines autonomen Fahrzeuges als autonome landwirtschaftliche Arbeitsmaschine zu agieren und eine demgemäß autonome landwirtschaftliche Arbeitsmaschine nach den Oberbegriffen der Ansprüche 1 und 13.

In der modernen Landwirtschaft sind vermehrt Bestrebungen dahingehend zu erkennen Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass kein Bediener in einer Kabine zur Steuerung derselben vorhanden ist. Demnach steht bei autonomen landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einer landwirtschaftlichen Fläche ausführen kann. Derartige autonome landwirtschaftliche Arbeitsmaschinen werden daher auch als unbemannte landwirtschaftliche Arbeitsmaschinen bezeichnet.

Aus der WO2015/173073A1 ist beispielsweise ein Verfahren zum Ernten von Erntegut mittels bemannter landwirtschaftlicher Arbeitsmaschinen und unbemannter landwirtschaftlicher Arbeitsmaschinen, also autonomen landwirtschaftlichen Arbeitsmaschine, bekannt. Der Betrieb und die Wegstrecke, die von einer unbemannten landwirtschaftlichen Arbeitsmaschine während ihres Betriebs auf einer landwirtschaftlichen Fläche zurückgelegt wird, werden hier durch den Bediener einer bemannten landwirtschaftlichen Arbeitsmaschine gesteuert. Dieser befindet sich hierfür durchgehend während des Betriebs der autonomen landwirtschaftlichen Arbeitsmaschinen in unmittelbarer Nähe zu diesen. Der Bediener der bemannten landwirtschaftlichen Arbeitsmaschine ist demnach dazu in der Lage, den Betrieb der unbemannten landwirtschaftlichen Arbeitsmaschinen visuell zu überwachen und die unbemannten landwirtschaftlichen Arbeitsmaschinen entsprechend dem geplanten Einsatz über eine drahtlose Fernsteuerung zu steuern.

Die US 2020/159220 A1 beschreibt eine Plattform, die mehrere Hardware- und Softwareelemente zur Automatisierung der Leistung von Maschinen und Fahrzeugen im Gelände oder auf dem Feld innerhalb eines gemeinsamen Betriebssystems integriert. Dabei ist eine Software-Strukturarchitektur mit einer ausführenden Steuerungsschicht vorgesehen. Die Steuerungsschicht ist ein Software-Subsystem, das die Steuerung autonom betriebener Geräte koordiniert und für Mikrodienste verantwortlich ist, die Befehlsübermittlung, Sicherheitsüberwachung, Einsatzsteuerung im Feld, Bahnplanung und Maschinenkonfiguration umfassen können.

Nachteilig bei einem derartigen Verfahren ist, dass der Betrieb der autonomen landwirtschaftlichen Arbeitsmaschine an die Gegenwart eines Bedieners einer bemannten landwirtschaftlichen Arbeitsmaschine zwingend geknüpft ist, der sich stets in unmittelbarer Nähe zu der unbemannten landwirtschaftlichen Arbeitsmaschine befindet, um diese fernsteuern zu können. Zwar werden demnach Arbeitsschritte dem Prinzip nach autonom von den unbemannten Arbeitsmaschinen durchgeführt, jedoch ist stets die Nähe einer Person zur Durchführung der Arbeitsschritte durch die autonome landwirtschaftliche Arbeitsmaschine erforderlich.

Es ist deshalb Aufgabe der Erfindung die beschriebenen Nachteile des Standes der Technik zu vermeiden und insbesondere eine autonome landwirtschaftliche Arbeitsmaschine vorzuschlagen, die eine autonome Durchführung von Arbeitsschritten ermöglicht und zwar ohne, dass sich eine Person in der Nähe der autonomen landwirtschaftlichen Arbeitsmaschine aufhalten muss, um den Betrieb der autonomen landwirtschaftlichen Arbeitsmaschine zu überwachen und diese während der Durchführung zu steuern.

Diese Aufgabe wird erfindungsgemäß durch die kennzeichnenden Merkmale der Ansprüche 1 und 13 gelöst.

Indem ein auf elektronischem Datenaustausch basierendes Assistenzsystem zur Befähigung eines autonomen Fahrzeuges als autonome landwirtschaftliche Arbeitsmaschine zu agieren eingerichtet ist, den Einsatz zumindest eines autonomen Fahrzeugs zu planen, dem autonomen Fahrzeug die für den Einsatz erforderlichen Informationen zu übermitteln, im Arbeitsbetrieb das autonome Fahrzeug zumindest teilweise zu steuern und den Arbeitsbetrieb des autonomen Fahrzeugs zu überwachen, wird sichergestellt, dass eine autonome Durchführung von Arbeitsschritten durch die autonome landwirtschaftliche Arbeitsmaschine ermöglicht wird und zwar ohne, dass sich eine Person in der Nähe der autonomen landwirtschaftlichen Arbeitsmaschine aufhalten muss, um den Betrieb der autonomen landwirtschaftlichen Arbeitsmaschine zu überwachen und diese während der Durchführung zu steuern.

In einer voreilhaften Ausgestaltung der Erfindung umfasst das Assistenzsystem ein oder mehrere Datenverarbeitungseinrichtungen, Datenempfangseinrichtungen und Datensendeeinrichtungen, wobei die Datenverarbeitungseinrichtungen, Datenempfangseinrichtungen und Datensendeeinrichtungen einer oder mehreren autonomen Fahrzeugen und einem externen Server zugeordnet sind. Dies hat insbesondere den Effekt, dass die eine oder die mehreren autonomen landwirtschaftlichen Arbeitsmaschinen miteinander und mit einem Server kommunizieren können, sodass die autonome Steuerung und Überwachung der autonomen landwirtschaftlichen Arbeitsmaschinen komplexe Zusammenhänge berücksichtigen kann, um jeder der autonom agierenden landwirtschaftlichen Arbeitsmaschinen sicher zu steuern und zu regeln.

Um die zur Steuerung und Überwachung der autonomen landwirtschaftlichen Arbeitsmaschinen erforderlichen umfangreichen Datenmengen stets verfügbar zu haben ist in einer weiteren vorteilhaften Ausgestaltung vorgesehen, dass der externe Server als Datencloud ausgeführt ist.

Damit die Erstellung der autonomen landwirtschaftlichen Arbeitsmaschine auf die für den jeweiligen Anwendungsfall bezogenen Maßnahmen beschränkt sein kann ist weiter vorgesehen, dass die autonome landwirtschaftliche Arbeitsmaschine aus einem autonomen Fahrzeug abgeleitet wird, welches unbemannt ist und bereits selbstständig Fahrbewegungen und Arbeitstätigkeiten ausführt.

Erfindungsgemäß ist vorgesehen, dass an das Assistenzsystem ein kundenspezifischer Einsatzplan übergeben wird, wobei der kundenspezifische Einsatzplan eine zu erbringende Dienstleistung zumindest nach Art und Umfang beschreibt. Dies hat insbesondere den Effekt, dass das Assistenzsystem völlig eigenständig die auf den spezifischen Anwendungsfall zugeschnittene autonome landwirtschaftliche Arbeitsmaschine kreieren kann.

Eine besonders vorteilhafte Ausgestaltung der Erfindung ergibt sich dann, wenn das Assistenzsystem aus dem Einsatzplan in einem Modul "Einsatzplanung" in einem Ergebnisschritt eine erforderliche Anzahl von autonomen Fahrzeugen bestimmt und deren Bereitstellung veranlasst. Dies hat insbesondere den Effekt, dass der Ersteller des Einsatzplanes, in der Regel der Auftraggeber, vollständig von der Beschaffung der geeigneten landwirtschaftlichen Arbeitsmaschinen entlastet ist.

Indem das Assistenzsystem aus dem Einsatzplan in einem Modul "erforderliche Informationen" in einem Ergebnisschritt dem autonomen Fahrzeug Informationen und Equipment zuordnen, sodass das autonome Fahrzeug aus dem kundenspezifischen Einsatzplan abgeleitete Fahrbewegungen und Arbeitstätigkeiten ausführen kann wird sichergestellt, dass die kreierte autonome landwirtschaftliche Arbeitsmaschine so beschaffen ist und gesteuert und überwacht werden kann, dass sie den kundenspezifischen Einsatzplan optimal erfüllen kann. In diesem Zusammenhang ist es weiter von Vorteil, wenn das Assistenzsystem in einem Ergebnisdatensatz dem autonomen Fahrzeug Informationen und Equipment zuordnet die das autonome Fahrzeug in eine autonome landwirtschaftliche Arbeitsmaschine überführen, welche den vom Auftraggeber definierten Einsatzplan optimal abarbeiten, d.h. erfüllen kann.

In einer weiteren vorteilhaften Ausgestaltung der Erfindung ist vorgesehen, dass das Assistenzsystem aus dem Einsatzplan in einem Modul "Steuerung" einen Ergebnisdatensatz generiert, der Steuerungsdaten umfasst, die die jeweilige autonome landwirtschaftliche Arbeitsmaschine bei Umsetzung der ermittelten Fahrbewegungen und Arbeitstätigkeiten steuert, sodass jedweder menschlicher Eingriff während der von der autonom agierenden landwirtschaftlichen Arbeitsmaschine durchzuführenden Tätigkeiten entbehrlich wird. In diesem Zusammenhang ist es von Vorteil, wenn der Ergebnisdatensatz auf Basisdaten beschränkt ist und die vollständige Steuerung der autonomen landwirtschaftlichen Arbeitsmaschine zur Realisierung der Fahrbewegungen und der Arbeitstätigkeiten von der autonomen landwirtschaftlichen Arbeitsmaschine selbst bewirkt wird. Auf diese Weise wird der Einfluss von Datenübertragungsproblemen zwischen einem externen Server und der jeweiligen autonomen landwirtschaftlichen Arbeitsmaschine reduziert, im Idealfall ganz vermieden.

Indem das Assistenzsystem erfindungsgemäß in einem Modul "Überwachung" die Fahrbewegung und Arbeitstätigkeit der einen oder mehreren autonomen landwirtschaftlichen Arbeitsmaschinen überwacht und bei Identifikation kritischer Situationen in die Steuerung der jeweiligen autonomen landwirtschaftlichen Arbeitsmaschine eingreift wird sichergestellt, dass von der autonom agierenden landwirtschaftlichen Arbeitsmaschine einerseits keine Gefahren für Dritte ausgehen und zudem Beschädigungen an der landwirtschaftlichen Arbeitsmaschine selbst vermieden werden. Auf diese Weise kann sichergestellt werden, dass die autonom agierende landwirtschaftliche Arbeitsmaschine aus dem ihr zugewiesenen Territorium nicht ausbricht, nicht mit anderen Fahrzeugen oder im zu bearbeitenden Territorium vorhandenen Hindernissen kollidiert. Zudem wird mittels dieser Überwachung sichergestellte, dass die autonome landwirtschaftliche Arbeitsmaschine eine qualitätsgerechte Arbeitstätigkeit ausführt.

Eine besonders effiziente Realisierung der Überwachungsfunktion wird dann erreicht, wenn erfindungsgemäß zumindest die Überwachung der Fahrbewegung und der Arbeitstätigkeit der einen oder mehreren autonomen landwirtschaftlichen Arbeitsmaschinen durch automatisiertes Buchen einer externen Service-Dienstleistung für die eine oder mehreren autonomen landwirtschaftlichen Arbeitsmaschinen bewirkt wird. Dies hat insbesondere den Effekt, dass ein Auftraggeber auf diese Weise einen sicheren Betrieb der jeweiligen autonom agierenden landwirtschaftlichen Arbeitsmaschine sicherstellen kann.

Eine einfache Aktivierung der Steuerungs- und Überwachungsfunktionen ergibt sich dann, wenn die von der mindestens einen oder den mehreren autonomen landwirtschaftlichen Arbeitsmaschinen und/oder dem Auftraggeber angeforderte externe Service-Dienstleistung eine von der jeweiligen landwirtschaftlichen Arbeitsmaschine entfernte Fernüberwachungs- und/oder Fernsteuerungsdienstleistung ist, welche nach Anforderung freigeschaltet wird und die eingerichtet ist, die Fernüberwachung und/oder Fernsteuerung der mindestens einen oder der mehreren autonomen landwirtschaftlichen Arbeitsmaschinen vorzunehmen.

Die Umsetzung der georderten Fernüberwachungs- und/oder Fernsteuerungsdienstleistung lässt sich dann besonders effizient und störungsarm umsetzen, wenn die mittels der Fernüberwachungs- und/oder Fernsteuerungsdienstleistung zu überwachende und/oder zu steuernde zumindest eine landwirtschaftliche Arbeitsmaschine über Mittel verfügt, vorzugsweise zumindest eine Datenverarbeitungseinrichtung, eine Datensendeeinrichtung und eine Datenempfangseinrichtung zum Übertragen von Maschinendaten und/oder Umfelddaten in regelmäßigen oder unregelmäßigen zeitlichen Abständen oder in Echtzeit an eine einem Server zugeordnete Datenbank, wobei die Maschinendaten und/oder Umfelddaten in der Datenbank gesammelt und der jeweiligen autonomen landwirtschaftlichen Arbeitsmaschine zugeordnet und mit weiteren verfügbaren Daten aus der unmittelbaren Umgebung der autonomen landwirtschaftlichen Arbeitsmaschine verknüpft werden, wobei die in der Datenbank des Servers hinterlegten Maschinendaten und/oder Umfelddaten so strukturiert sind, dass das Assistenzsystem jederzeit auf die jeweilige autonome landwirtschaftliche Arbeitsmaschine zugreifen und deren Steuerung übernehmen kann.

Die Überwachungsfunktion wird auch dadurch noch gesteigert, wenn in einer vorteilhaften Ausgestaltung der Erfindung die Fernüberwachungs- und/oder Fernsteuerungsdienstleistung einen Geo-Fence-Datensatz bereitstellt, und die Anwendung des Geo-Fence-Datensatz durch die eine oder die mehreren autonomen landwirtschaftlichen Arbeitsmaschinen bewirkt, dass die Bewegung der zumindest einen oder der mehreren autonomen landwirtschaftlichen Arbeitsmaschinen auf das zu bearbeitende Territorium begrenzt ist und ein Ausbrechen aus diesem Territorium vermieden wird.

In einer weiteren vorteilhaften Ausgestaltung der Erfindung kann vorgesehen sein, dass das Assistenzsystem die eine oder mehreren autonomen landwirtschaftlichen Arbeitsmaschinen einem Hauptprozess als Unterstützer zuordnet, wobei das Assistenzsystem den Bedarf an Unterstützung in einem Umfeld der einen oder mehreren autonomen landwirtschaftlichen Arbeitsmaschinen ermittelt und den verfügbaren autonomen landwirtschaftlichen Arbeitsmaschinen in Abhängigkeit vom identifizierten Bedarf Aufträge zuordnet. Dies hat insbesondere den Effekt, dass eine oder mehrere der erfindungsgemäßen autonomen landwirtschaftlichen Arbeitsmaschinen in bestehende landwirtschaftliche Prozessketten integriert werden können, ohne dass dies zu Störungen in der Zusammenarbeit der bereits in eine Prozesskette involvierten bemannten oder unbemannten Fahrzeuge und der neu hinzutretenden autonomen landwirtschaftlichen Arbeitsmaschinen führt.

In einer vorteilhaften Ausgestaltung der Erfindung ist zudem vorgesehen, dass der Auftraggeber für das Buchen der Fernüberwachungs- und/oder Fernsteuerungsdienstleistung eine Nutzungsgebühr entrichtet. Dies hat für den Auftraggeber den Vorteil, dass er die Konfektionierung der für die Abarbeitung seines Einsatzplans notwendigen Maschinen, sowie deren Steuerung und Überwachung ressourcensparend nach Art eines Outsourcings erkauft ohne selbst in diesen Prozess direkt involviert zu sein.

Indem ausgehend von einem autonomen fahrerlosen Fahrzeug, welches eingerichtet ist selbstständig Fahrbewegungen und Arbeitstätigkeiten auszuführen unter zumindest teilweiser Anwendung des erfindungsgemäßen Assistenzsystems das autonome, fahrerlose Fahrzeug in Abhängigkeit von einem Einsatzfall mit Informationen und Equipment konfektioniert wird, um als speziell ausgeführte autonome landwirtschaftliche Arbeitsmaschine zu agieren und wobei die Fahrbewegungen und Arbeitstätigkeiten der autonomen landwirtschaftlichen Arbeitsmaschine zumindest teilweise fernüberwacht und/oder ferngesteuert werden, wird sichergestellt, dass eine autonom agierende landwirtschaftliche Arbeitsmaschine gebildet wird, die eine qualitativ hochwertigen Arbeitstätigkeit erbringt und zudem sicher arbeitet.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Ansicht des erfindungsgemäßen Assistenzsystems
- Figur 2: eine Detailbeschreibung des erfindungsgemäßen Verfahrens am Beispiel einer Maschinenflotte
- Figur 3: eine schematische Darstellung der Erstellung der erfindungsgemäßen autonomen landwirtschaftlichen Arbeitsmaschine

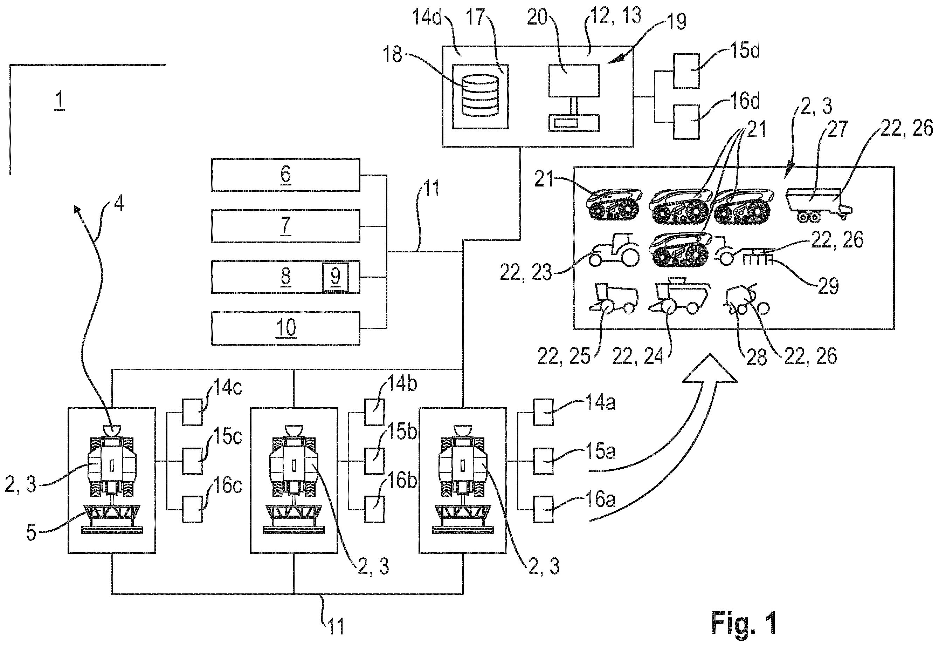

Fig. 1 zeigt exemplarisch eine schematische Darstellung des erfindungsgemäßen, auf elektronischem Datenaustausch basierenden Assistenzsystems 1 welches in noch näher zu beschreibender Weise eingerichtet ist, ein oder mehrere autonome Fahrzeuge 2 zu befähigen als autonome landwirtschaftliche Arbeitsmaschinen 3 zu agieren. Charakteristisch für das autonome Fahrzeug 2 und die aus ihm hervorgehende autonome landwirtschaftliche Arbeitsmaschine 3 ist, dass das autonome Fahrzeug 2 und die autonome landwirtschaftliche Arbeitsmaschine 3 unbemannt sind und selbstständig Fahrbewegungen 4 und Arbeitstätigkeiten 5 ausführen. Damit dies möglich wird ist das erfindungsgemäße Assistenzsystem 1 so beschaffen, dass es den Einsatz eines oder mehrerer autonomer Fahrzeuge 2 planen kann. Hierfür umfasst das Assistenzsystem 1 ein Modul "Einsatzplanung" 6. Damit das jeweilige autonome Fahrzeug 2 selbstständig Fahrbewegungen 4 und spezifische Arbeitstätigkeiten 5 ausführen kann umfasst das Assistenzsystem 1 zudem ein Modul "erforderliche Informationen" 7, wobei das Assistenzsystem 1 in noch näher zu beschreibender Weise die erforderlichen Informationen 7 beschafft und an das jeweilige autonome Fahrzeug 2 übermittelt. Damit die unbemannten autonomen Fahrzeuge 2 die für den jeweiligen Anwendungsfall erforderlichen Fahrbewegungen 4 und Arbeitstätigkeiten 5 in einer hohen Arbeitsqualität ausführen können ist zudem vorgesehen, dass das Assistenzsystem 1 ein Modul "Steuerung" 8 umfasst, sodass das Assistenzsystem 1 die Fahrbewegung 4 und die jeweilige Arbeitstätigkeit 5 zumindest teilweise steuert. Es liegt in diesem Zusammenhang im Rahmen der Erfindung, dass das Modul "Steuerung" 8 nur Basisdaten 9 an das jeweilige autonome Fahrzeug 2 übermittelt und die vollständige Steuerung der Fahrbewegung 4 und der jeweiligen Arbeitstätigkeit 5 von dem jeweiligen autonomen Fahrzeug 2 selbst vorgenommen wird. Denkbar ist aber auch, dass die Steuerung der Fahrbewegung 4 und der Arbeitstätigkeit 5 einer oder mehrerer autonomer Fahrzeuge 2 vollständig von dem erfindungsgemäßen Assistenzsystem 1 übernommen wird. Weiter ist das erfindungsgemäße Assistenzsystem 1 so beschaffen, dass es ein Modul "Überwachung" 10 umfasst mittels dessen der Arbeitsbetrieb, hier zumindest die Fahrbewegung 4 und die jeweilige Arbeitstätigkeit 5, in noch näher zu beschreibender Weise überwacht werden.

Das Assistenzsystem 1 ist weiter so beschaffen, dass ein Datenaustauch 11 der Module 6 - 10 untereinander, eines oder aller Module 6 - 10 mit einem oder allen autonomen Fahrzeugen 2 und zwischen den autonomen Fahrzeugen 2 möglich ist. Zudem ist das Assistenzsystem 1 so beschaffen, dass der Datenaustausch 11 auch mit einem externen Server 12 erfolgt. In erfindungsgemäßer Weise kann der Server 12 als Daten-Cloud 13 ausgeführt sein. Damit das Assistenzsystem 1 in erfindungsgemäßer Weise arbeiten kann umfasst das Assistenzsystem 1 zunächst eine oder mehrere Datenverarbeitungseinrichtungen 14a..n, ein oder mehrere Datensendeeinrichtungen 15a..n und ein oder mehrere Datenempfangseinrichtungen 16a..n. Damit der beschriebene Datenaustausch 11 umfassend möglich ist sind jedem der autonomen Fahrzeuge 2 und dem einen oder gegebenenfalls mehreren Servern 12 zumindest jeweils eine Datenverarbeitungseinrichtung 14a..n, zumindest jeweils eine Datensendeeinrichtung 15a..n und zumindest jeweils eine Datenempfangseinrichtung 16a..n zugeordnet. Zudem umfasst jede der Datenverarbeitungseinrichtungen 14a..n eine Speichereinheit 17 mit wenigstens einer darin hinterlegten Datenbank 18 sowie einer Recheneinheit 19, die zur Verarbeitung von in der Speichereinheit 17 hinterlegten Daten eingerichtet ist. Die Recheneinheit 19 umfasst zudem eine Eingabe-Ausgabeeinheit 20, mittels der Daten aus der Datenbank 18 abgerufen, eingegeben oder geändert werden können. Die Speichereinheit 17 und die Recheneinheit 19 können voneinander entfernt angeordnet sein. Die Speichereinheit 17 und die Recheneinheit 19 kommunizieren miteinander mittels eines Netzwerkes. Die beschriebenen Module 6 -10 sind in einer bevorzugten Ausgestaltung Bestandteil der dem Server 12 zugeordneten Datenbank 18.

Weiter liegt es im Rahmen der Erfindung, dass das als autonome landwirtschaftliche Arbeitsmaschine 3 ausgeführte autonome Fahrzeug 2 entweder ein universelles Grundfahrzeug 21 oder ein bereits spezifisch ausgeführtes Grundfahrzeug 22 umfasst, wobei das spezifisch ausgeführte Grundfahrzeug 22 etwa als Traktor 23, als Mähdrescher 24, als Feldhäcksler 25 oder als sogenanntes Anbaugerät 26, etwa als Ladewagen, 27 Ballenpresse 28 oder Futtererntemaschine 29 ausgeführt sein kann.

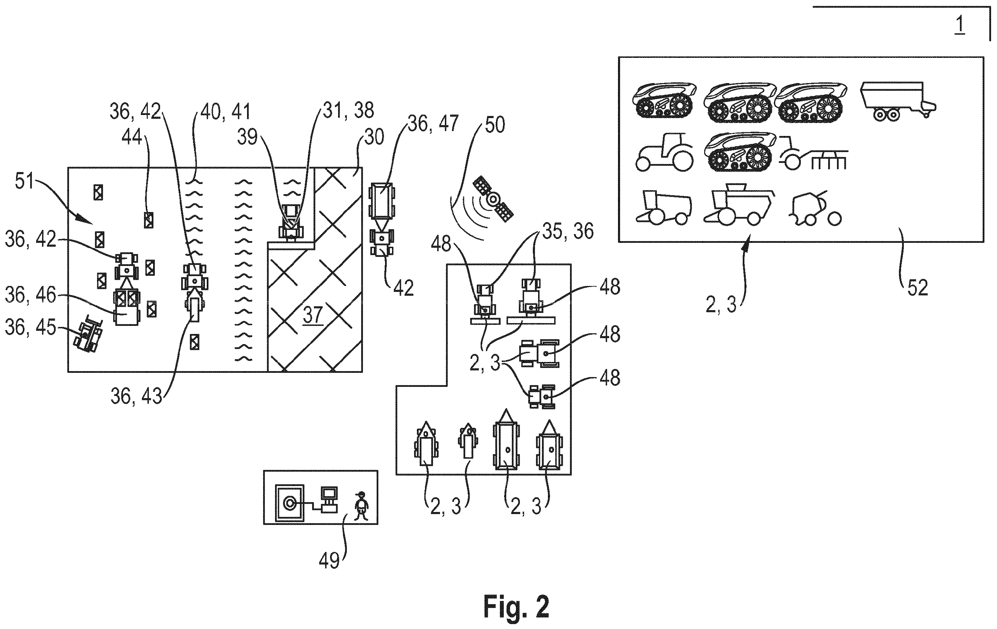

Figur 2 zeigt schematisch das erfindungsgemäß auf elektronischem Datenaustausch basierende Assistenzsystem 1 am Beispiel eines konkreten landwirtschaftlichen Anwendungsfalles, nämlich der Planung der Prozesskette - Abernten einer Anbaufläche 30 und Bergung des Erntegutes 31 -.

Unter konventionellen Bedingungen, d.h. die in den Prozess eingebundenen Fahrzeuge sind bemannt, würde die Prozesskette - Abernten einer Anbaufläche 30 und Bergung des Erntegutes 31 - wie folgt strukturiert sein:
Zunächst würden ein oder mehrere als Mähdrescher 35 ausgeführte landwirtschaftliche Arbeitsmaschinen 36 den auf einer Anbaufläche 30 gewachsenen Bestand 37 abernten. Im dargestellten Ausführungsbeispiel werden der von den Fruchtständen 38 gebildete Teil des Erntegutes 31 auf dem Mähdrescher 35 in einem sogenannten Korntank 39 zwischengespeichert, während der verbleibende Teil des Erntegutes 31, das Stroh 40, in Schwaden 41 auf der Anbaufläche 30 abgelegt wird. Hat das in Schwaden 41 abgelegte Stroh 40 einen die Einlagerung des Strohs 40 zulassenden Feuchtegehalt erreicht, verpresst eine von einem Traktor 42 gezogene Ballenpresse 43 das Stroh 40 zu Erntegutballen 44, die zunächst auf der Anbaufläche 30 abgelegt werden. In einem weiteren Arbeitsgang der Prozesskette werden die Erntegutballen 44 beispielsweise mittels sogenannter Hubstapler 45 auf von Traktoren 42 gezogene Pritschenanhänger 46 verladen und zur Einlagerung abtransportiert. In analoger Weise werden die im Korntank 39 zwischengespeicherten Fruchtstände 38 von schleppergezogenen Transportanhängern 47 übernommen und zur Einlagerung oder Weiterverarbeitung geführt. Moderne landwirtschaftliche Arbeitsmaschinen 36 verfügen zudem über Sende- und Empfangseinheiten 48 mittels derer sie mit weiteren landwirtschaftlichen Arbeitsmaschinen 36 und/oder stationären Einrichtungen 49 in Kommunikation treten können, wobei die Sende- und Empfangseinheiten 48 in der Regel auch satellitengenerierte GPS-Signale 50 empfangen, die dann beispielsweise zur Generierung von Positionsdaten der jeweiligen landwirtschaftlichen Arbeitsmaschine 36 herangezogen werden. Auch bei der Abarbeitung von Prozessketten mittels konventioneller landwirtschaftlicher Arbeitsmaschinen 36 werden die erforderlichen landwirtschaftlichen Arbeitsmaschinen 36, die erforderliche Maschinenflotte 51 aus einem Fuhrpark 52 zusammengestellt.

Soll nun diese bekannte Prozesskette unter Verwendung des zuvor beschriebene erfindungsgemäßen Assistenzsystems 1 abgearbeitet werden sind einige oder aller der konventionellen, bemannten landwirtschaftlichen Arbeitsmaschinen 36 durch die erfindungsgemäß als autonome landwirtschaftliche Arbeitsmaschinen 3 ausgeführten autonomen Fahrzeuge 2 zu ersetzen. Mithin kann die zur Abarbeitung der beispielhaft gewählten Prozesskette erforderliche Maschinenflotte 51 bemannte und unbemannte oder ausschließlich unbemannte landwirtschaftliche Arbeitsmaschinen 3, 36 umfassen, sodass auch der Fuhrpark 52 aus welchem die Maschinenflotte 51 zusammengestellt wird bemannte und unbemannte landwirtschaftliche Arbeitsmaschinen 3, 36 umfasst.

Vor dem Hintergrund, dass die Erfindung auf das Kreieren einer autonomen, also unbemannten landwirtschaftlichen Arbeitsmaschine 3 und zugehöriges Assistenzsystem 1 gerichtet ist werden im Folgenden bemannte landwirtschaftliche Arbeitsmaschinen 36 nicht mehr erwähnt. Es liegt jedoch im Rahmen der Erfindung, dass stets auch bemannte landwirtschaftliche Arbeitsmaschinen 36 in die beschriebenen oder beliebig gestalteten landwirtschaftlichen Prozessketten integriert sein können.

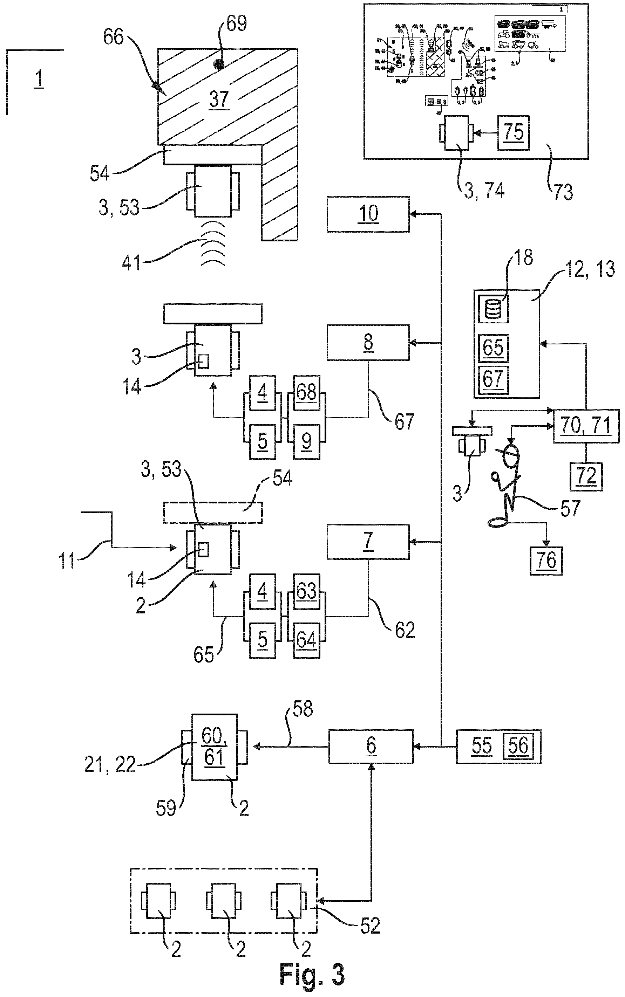

Figur 3 zeigt schematisch wie ein autonomes Fahrzeug 2 unter Einsatz des erfindungsgemäßen Assistenzsystems 1 zu der erfindungsgemäßen autonomen landwirtschaftlichen Arbeitsmaschine 3 gewandelt wird. Im hier exemplarisch gewählten Beispiel ist die autonome landwirtschaftliche Arbeitsmaschine 3 als Selbstfahrmähwerk 53 ausgeführt, welches eingerichtet ist mittels eines Mähvorsatzes 54 einen Erntegutbestand 37 abzuernten und in einem Schwad 41 abzulegen. Zunächst wird an das Modul "Einsatzplanung" 6 des Assistenzsystems 1 ein kundenspezifischer Einsatzplan 55 übermittelt. Das Modul "Einsatzplanung" 6 bestimmt dann zunächst die Zahl der notwendigen autonomen Fahrzeuge 2 und stellt deren Anzahl aus einem Fuhrpark 52 zusammen. Es liegt im Rahmen der Erfindung, dass die autonomen Fahrzeuge 2 aus einem oder verschiedenen Fuhrparks 52 zusammengestellt werden und ein oder mehrere autonome Fahrzeuge 2 umfassen können. Im Folgenden wird die Erstellung der autonomen landwirtschaftlichen Arbeitsmaschine 3 exemplarisch an einem einzigen autonomen Fahrzeug 2 beschrieben.

Der kundenspezifische Einsatzplan 55 ist dabei so beschaffen, dass er eine zu erbringende Dienstleistung 56 zumindest nach Art und Umfang beschreibt. Der Auftraggeber 57 bestellt die Dienstleistung 56 nach Art und Umfang. Sofern bekannt gibt er die jeweilige Einsatzzeit vor, nämlich zumindest denjenigen Zeitraum in welchem die Dienstleistung 56 zu erbringen ist. Weiter umfasst der kundenspezifische Einsatzplan 55 den oder die Einsatzorte sowie gegebenenfalls die Reihenfolge und Art der durchzuführenden Arbeitstätigkeiten 5.

Das Assistenzsystem 1 ermittelt aus dem Einsatzplan 55 in dem Modul "Einsatzplanung" 6 in einem Ergebnisschritt 58 eine erforderliche Anzahl von autonomen Fahrzeugen 2, wobei das autonome Fahrzeug 2, wie bereits beschrieben, als universelles Grundfahrzeug 21 oder bereits als spezifisch ausgeführtes Grundfahrzeug 22 ausgebildet sein kann. Im dargestellten Ausführungsbeispiel wäre das spezifisch ausgeführte Grundfahrzeug 22 dann das bereits vorkonfektionierte Selbstfahrmähwerk 53, sofern ein solches in einem Maschinenpark 52 verfügbar ist.

Das autonome Fahrzeug 2, unabhängig davon ob es als universelles Grundfahrzeug 21 oder bereits als spezifisch ausgeführtes Grundfahrzeug 22 ausgebildet ist ist in an sich bekannter und daher hier nicht näher beschriebenen Weise bereits so strukturiert, dass es über ein Fahrwerk 59 und zugehörige Energieübertragungsmittel 60 sowie eine Energiequelle 61, etwa einen Verbrennungs- oder Elektromotor und gegebenenfalls zugehörige Batterien verfügt.

Nach dem die geeignete Anzahl erforderlicher autonomer Fahrzeuge 2 ermittelt wurde leitet das Assistenzsystem 1 in der bereits beschriebenen Weise aus dem Einsatzplan 55 in einem Modul "erforderliche Informationen" 7 in einem Ergebnisschritt 62 für das autonomen Fahrzeug 2 Informationen 63 und Equipment 64 ab, sodass das autonome Fahrzeug 2 aus dem kundenspezifischen Einsatzplan 55 abgeleitete Fahrbewegungen 4 und Arbeitstätigkeiten 5 ausführen kann. Im Ergebnisschritt 62 wird ein Ergebnisdatensatz 65 generiert, der in dem bereits beschriebenen Server 12, der als Daten-Cloud 13 ausgeführt sein kann, hinterlegt und dem jeweiligen autonomen Fahrzeug 2 eindeutig zugeordnet ist. Das Fahrerassistenzsystem 1 ist zudem so strukturiert, dass es bei der Generierung der dem autonomen Fahrzeug 2 zuzuordnenden Informationen 63 Informationen aus verschiedensten Datenbanken 18 berücksichtigt, die geeignet sind eine optimierte Fahrbewegung 4 sowie eine optimierte Arbeitstätigkeit 5 des autonomen Fahrzeugs 2 sicherzustellen. Im hier dargestellten Ausführungsbeispiel umfasst der Ergebnisdatensatz 65 unter anderem Informationen die einen optimalen Betrieb des Mähvorsatzes 54 sicherstellen. Zudem umfasst der Ergebnisdatensatz 65 Informationen wie sich das autonome Fahrzeug 2 zum Einsatzort und/oder auf dem zu bearbeitenden Territorium 66 bewegen soll. Das dem autonomen Fahrzeug 2 im Ergebnisdatensatz 65 zugeordnete Equipment 64 muss sodann bereitgestellt und an das autonome Fahrzeug 2 angebaut werden. Dies kann in der Weise erfolgen, dass das Assistenzsystem 1 Anbieter des erforderlichen Equipments 64 identifiziert und entweder Anweisungen oder Aufträge generiert, die entweder das erforderliche Equipment 64 zum autonomen Fahrzeug 2 liefern oder das autonome Fahrzeug 2 zum erforderlich Equipment 64 beordert. In allen denkbaren Fällen muss letztendlich des erforderliche Equipment 64 an das autonome Fahrzeug 2 angebaut werden. Die sonstigen Informationen 63 des Ergebnisdatensatzes 65 können mittels des bereits beschriebenen Datenaustauschs 11 direkt an die dem jeweiligen autonomen Fahrzeug 2 zugeordnete Datenverarbeitungseinrichtung 14 übertragen werden. Im Ergebnis führt das dazu, dass das autonome Fahrzeug 2 in erfindungsgemäßer Weise in eine autonomen landwirtschaftlichen Arbeitsmaschine 3, hier ein Selbstfahrmähwerk 53, überführt wird. Es liegt im Rahmen der Erfindung, dass in Abhängigkeit von dem kundenspezifischen Einsatzplan 55 durch das Assistenzsystem 1 unterschiedlichste Informationen 63 und erforderliches Equipment 64 ermittelt und zusammengestellt werden, sodass jede Art von autonomer landwirtschaftlicher Arbeitsmaschine 3 kreiert werden kann, etwa Mähdrescher 24, Feldhäcksler 25, Traktoren 23, jede Art von Anbaugerät 26, Ladewagen 27, Ballenpressen 28, Futtererntemaschinen 29, Bodenbearbeitungsmaschinen, Sä- und Pflanzmaschinen und Düngerstreuer, um nur einige beispielhaft zu nennen.

Nachdem die eine oder die mehreren autonomen landwirtschaftlichen Arbeitsmaschinen 3 auf Basis des Ergebnisdatensatzes 65 konfektioniert sind ermittelt das Assistenzsystem 1 aus dem Einsatzplan 55 in dem bereits beschriebenen Modul "Steuerung" 8 einen weiteren Ergebnisdatensatz 67, der Steuerungsdaten 68 umfasst, die die jeweilige autonome landwirtschaftliche Arbeitsmaschine 3 bei Umsetzung der ermittelten Fahrbewegungen 4 und Arbeitstätigkeiten 5 steuert. Der weitere Ergebnisdatensatz 67 kann auf Basisdaten 9 beschränkt sein, wobei die vollständige Steuerung der autonomen landwirtschaftlichen Arbeitsmaschine 3 zur Realisierung der Fahrbewegungen 4 und der Arbeitstätigkeiten 5 von der autonomen landwirtschaftlichen Arbeitsmaschine 3 selbst bewirkt wird. Dies hat insbesondere den Vorteil, dass die autonome landwirtschaftliche Arbeitsmaschine 3 sich selbst in Abhängigkeit von ihren konkreten Einsatzbedingungen organisieren kann und zudem nicht auf eine permanente Verbindung mit dem Server 12 zwecks Datenaustausch 11 angewiesen ist. Der Ergebnisdatensatz 67 wird in dem bereits beschriebenen Server 12, der als Daten-Cloud 13 ausgeführt sein kann, hinterlegt und dem jeweiligen autonomen Fahrzeug 2 eindeutig zugeordnet.

Nachdem die jeweilige autonome landwirtschaftliche Arbeitsmaschine mit Informationen 63 und Equipment 64 konfektioniert ist übernimmt das Assistenzsystem 1 in der bereits beschriebenen Weise mittels eines Moduls "Überwachung" 10 die Überwachung der Fahrbewegung 4 und der Arbeitstätigkeit 5 der einen oder mehreren autonomen landwirtschaftlichen Arbeitsmaschinen 3 und bei Identifikation kritischer Situationen, etwa Hindernisse 69 im zu bearbeitenden Territorium 66 oder Funktionsstörungen in der Arbeitstätigkeit 5 greift das Assistenzsystem 1 in die Steuerung der jeweiligen autonomen landwirtschaftlichen Arbeitsmaschine 3 ein. Weiter ist vorgesehen, dass zumindest die beschriebene Überwachung der Fahrbewegung 4 und der Arbeitstätigkeit 5 der einen oder mehreren autonomen landwirtschaftlichen Arbeitsmaschinen 3 durch automatisiertes Buchen 70 einer externen Service-Dienstleistung 71 für die eine oder mehreren autonomen landwirtschaftlichen Arbeitsmaschinen 3 bewirkt wird. Die automatisierte Buchung dieser externen Service-Dienstleistung 71 kann von einem Auftraggeber 57 oder der autonomen landwirtschaftlichen Arbeitsmaschine 3 selbst vorgenommen werden. In diesem Zusammenhang kann vorgesehen sein, dass die von der mindestens einen oder den mehreren autonomen landwirtschaftlichen Arbeitsmaschinen 3 und/oder dem Auftraggeber 57 angeforderte externe Service-Dienstleistung 71 eine von der jeweiligen landwirtschaftlichen Arbeitsmaschine 3 entfernte Fernüberwachungs- und/oder Fernsteuerungsdienstleistung 71 ist, welche nach Anforderung freigeschaltet wird und die eingerichtet ist, die Fernüberwachung und/oder Fernsteuerung der mindestens einen oder der mehreren autonomen landwirtschaftlichen Arbeitsmaschinen 3 vorzunehmen.

Die mittels der Fernüberwachungs- und/oder Fernsteuerungsdienstleistung 71 zu überwachende und/oder zu steuernde zumindest eine landwirtschaftliche Arbeitsmaschine 3 verfügt, wie bereits beschrieben, über Mittel, vorzugsweise zumindest eine Datenverarbeitungseinrichtung 14, eine Datensendeeinrichtung 15 und eine Datenempfangseinrichtung 16 zum Übertragen von Maschinendaten und/oder Umfelddaten in regelmäßigen oder unregelmäßigen zeitlichen Abständen oder in Echtzeit an eine dem Server 12 zugeordnete Datenbank 18. Dabei werden die Maschinendaten und/oder Umfelddaten in der Datenbank 18 gesammelt und der jeweiligen autonomen landwirtschaftlichen Arbeitsmaschine 3 zugeordnet und mit weiteren verfügbaren Daten aus der unmittelbaren Umgebung der autonomen landwirtschaftlichen Arbeitsmaschine 3 verknüpft. Die in der Datenbank 18 des Servers 12 hinterlegten Maschinendaten und/oder Umfelddaten sind so strukturiert, dass das Assistenzsystem 1 jederzeit auf die autonome landwirtschaftliche Arbeitsmaschine 3 zugreifen und deren Steuerung übernehmen kann.

Zudem umfasst die Fernüberwachungs- und/oder Fernsteuerungsdienstleistung 71 einen Geo-Fence-Datensatz 72. Die Anwendung des Geo-Fence-Datensatzes 72 durch die eine oder die mehreren autonomen landwirtschaftlichen Arbeitsmaschinen 3 bewirkt, dass die Bewegung der zumindest einen oder der mehreren autonomen landwirtschaftlichen Arbeitsmaschinen 3 auf das zu bearbeitende Territorium 66 begrenzt ist und die eine oder die mehreren autonomen landwirtschaftlichen Arbeitsmaschinen 2 das zu bearbeitende Territorium 66 nicht unkontrolliert verlassen.

In einer vorteilhaften Ausgestaltung der Erfindung ist das Assistenzsystem 1 so beschaffen, dass es die eine oder mehreren autonomen landwirtschaftlichen Arbeitsmaschinen 3 einem Hauptprozess 73 als Unterstützer 74 zuordnet, wobei das Assistenzsystem 1 den Bedarf an Unterstützung in einem Umfeld der einen oder mehreren autonomen landwirtschaftlichen Arbeitsmaschinen 3 ermittelt und den verfügbaren autonomen landwirtschaftlichen Arbeitsmaschinen 3 in Abhängigkeit vom identifizierten Bedarf Aufträge 75 zuordnet. Beispielsweise kann der in Figur 1 detailliert beschriebene Hauptprozess 73, von bemannten und unbemannten landwirtschaftlichen Arbeitsmaschinen bearbeitet werden, wobei die erfindungsgemäßen autonomen landwirtschaftlichen Arbeitsmaschinen 3 beispielsweise als Ladewagen 27, Hubstapler 45, Pritschen- oder Transportanhänger 46, 47 oder als das beschriebene Selbstfahrmähwerk 53 ausgeführt sein können.

Zudem ist vorgesehen, dass der Auftraggeber 57 für das Buchen der Fernüberwachungs- und/oder Fernsteuerungsdienstleistung 71 eine Nutzungsgebühr 76 entrichtet.

Im Ergebnis wird unter Verwendung des beschriebenen erfindungsgemäßen Assistenzsystems 1 ein autonomes, fahrerloses Fahrzeug 2, welches eingerichtet ist selbstständig Fahrbewegungen 4 und Arbeitstätigkeiten 5 auszuführen, in Abhängigkeit von einem Einsatzfall 55 mit Informationen 63 und Equipment 64 konfektioniert um als speziell ausgeführte autonome landwirtschaftliche Arbeitsmaschine 3 zu agieren und wobei die Fahrbewegungen 4 und Arbeitstätigkeiten 5 der autonomen landwirtschaftlichen Arbeitsmaschine 3 zumindest teilweise fernüberwacht und/oder ferngesteuert werden und die Fernüberwachung und/oder Fernsteuerung zumindest teilweise mittels des Assistenzsystems 1 erfolgt.

**Bezugszeichenliste:**

| | | | |
|---|---|---|---|
| 1 | Assistenzsystem | 33 | |
| 2 | autonomes Fahrzeug | 34 | |
| 3 | autonome landwirtschaftliche Arbeitsmaschine | 35 | Mähdrescher |
| 4 | Fahrbewegung | 36 | landwirtschaftliche Arbeitsmaschine |
| 5 | Arbeitstätigkeit | 37 | Erntegutbestand |
| 6 | Modul "Einsatzplanung" | 38 | Fruchtstände |
| 7 | Modul "erforderliche Informationen" | 39 | Korntank |
| 8 | Modul "Steuerung" | 40 | Stroh |
| 9 | Basisdaten | 41 | Schwad |
| 10 | Modul "Überwachung" | 42 | Traktor |
| 11 | Datenaustausch | 43 | Ballenpresse |
| 12 | Server | 44 | Erntegutballen |
| 13 | Daten-Cloud | 45 | Hubstapler |
| 14a..n | Datenverarbeitungseinrichtung | 46 | Pritschenhänger |
| 15a..n | Datensendeeinrichtung | 47 | Transportanhänger |
| 16a..n | Datenempfangseinrichtung | 48 | Sende- und Empfangseinheit |
| 17 | Speichereinheit | 49 | stationäre Einrichtung |
| 18 | Datenbank | 50 | GPS-Signal |
| 19 | Recheneinheit | 51 | Maschinenflotte |
| 20 | Eingabe-Ausgabeeinheit | 52 | Fuhrpark |
| 21 | Grundfahrzeug | 53 | Selbstfahrmähwerk |
| 22 | Grundfahrzeug | 54 | Mähvorsatz |
| 23 | Traktor | 55 | kundenspezifischer Einsatzplan |
| 24 | Mähdrescher | 56 | Dienstleistung |
| 25 | Feldhäcksler | 57 | Auftraggeber |
| 26 | Anbaugerät | 58 | Ergebnisschritt |
| 27 | Ladewagen | 59 | Fahrwerk |
| 28 | Ballenpresse | 60 | Energieübertragungsmittel |
| 29 | Futtererntemaschine | 61 | Energiequelle |
| 30 | Anbaufläche | 62 | Ergebnisschritt |
| 31 | Erntegut | 63 | Information |
| 32 | | 64 | Equipment |
| 65 | Ergebnisdatensatz | | |
| 66 | zu bearbeitendes Territorium | | |
| 67 | weiterer Ergebnisdatensatz | | |
| 68 | Steuerungsdaten | | |
| 69 | Hindernis | | |
| 70 | automatisiertes Buchen | | |
| 71 | Externe Service-Dienstleistung | | |
| 72 | Geo-Fence-Datensatz | | |
| 73 | Hauptprozess | | |
| 74 | Unterstützer | | |
| 75 | Auftrag | | |
| 76 | Nutzungsgebühr | | |

## Patentansprüche

1. Auf elektronischem Datenaustausch basierendes Assistenzsystem (1) zur Befähigung eines autonomen Fahrzeuges (2) als autonome landwirtschaftliche Arbeitsmaschine (3) zu agieren,
das Assistenzsystem (1) eingerichtet ist, den Einsatz zumindest eines autonomen Fahrzeugs (2) zu planen, dem autonomen Fahrzeug (2) die für den Einsatz erforderlichen Informationen zu übermitteln, im Arbeitsbetrieb das autonome Fahrzeug (2) zumindest teilweise zu steuern und den Arbeitsbetrieb des autonomen Fahrzeugs (2) zu überwachen,
wobei an das Assistenzsystem (1) ein kundenspezifischer Einsatzplan (55) übergeben wird, wobei der kundenspezifische Einsatzplan (55) eine zu erbringende Dienstleistung (56) zumindest nach Art und Umfang beschreibt,
wobei das Assistenzsystem (1) in einem Modul "Überwachung" (10) die Fahrbewegung (4) und Arbeitstätigkeit (5) der einen oder mehreren autonomen landwirtschaftlichen Arbeitsmaschinen (3) überwacht und bei Identifikation kritischer Situationen in die Steuerung der jeweiligen autonomen landwirtschaftlichen Arbeitsmaschine (3) eingreift,
**dadurch gekennzeichnet, dass** zumindest die Überwachung der Fahrbewegung (4) und der Arbeitstätigkeit (5) der einen oder mehreren autonomen landwirtschaftlichen Arbeitsmaschinen (3) durch automatisiertes Buchen (70) einer entsprechenden externen Service-Dienstleistung (71) für die eine
oder mehreren autonomen landwirtschaftlichen Arbeitsmaschinen (3) bewirkt wird.

2. Auf elektronischem Datenaustausch basierendes Assistenzsystem (1) zur Befähigung eines autonomen Fahrzeuges (2) als autonome landwirtschaftliche Arbeitsmaschine (3) zu agieren nach Anspruch 1,
**dadurch gekennzeichnet, dass**
das Assistenzsystem (1) ein oder mehrere Datenverarbeitungseinrichtungen (14a..n), Datenempfangseinrichtungen (16a..n) und Datensendeeinrichtungen (15a..n) umfasst, wobei die Datenverarbeitungseinrichtungen (14a..n), die Datenempfangseinrichtungen (16a..n) und die Datensendeeinrichtungen (15a..n) einer oder mehreren autonomen Fahrzeugen (2) und einem externen Server (12) zugeordnet sind.

3. Auf elektronischem Datenaustausch basierendes Assistenzsystem (1) zur Befähigung eines autonomen Fahrzeuges (2) als autonome landwirtschaftliche Arbeitsmaschine (3) zu agieren nach Anspruch 2,
**dadurch gekennzeichnet, dass**
der externe Server (12) als Datencloud (13) ausgeführt ist.

4. Auf elektronischem Datenaustausch basierendes Assistenzsystem (1) zur Befähigung eines autonomen Fahrzeuges (2) als autonome landwirtschaftliche Arbeitsmaschine (3) zu agieren nach einem der vorhergehenden Ansprüche,
**dadurch gekennzeichnet, dass**
das Assistenzsystem (1) aus dem Einsatzplan (55) in einem Modul "Einsatzplanung" (6) in einem Ergebnisschritt (58) eine erforderliche Anzahl von autonomen Fahrzeugen (2) bestimmt und deren Bereitstellung veranlasst.

5. Auf elektronischem Datenaustausch basierendes Assistenzsystem (1) zur Befähigung eines autonomen Fahrzeuges (2) als autonome landwirtschaftliche Arbeitsmaschine (3) zu agieren nach Anspruch 4,
**dadurch gekennzeichnet, dass**
das Assistenzsystem (1) aus dem Einsatzplan (55) in einem Modul "erforderliche Informationen" (7) in einem Ergebnisschritt (62) dem autonomen Fahrzeug (2) Informationen (63) und Equipment (64) zuordnen, sodass das autonome Fahrzeug (2) aus dem kundenspezifischen Einsatzplan (55) abgeleitete Fahrbewegungen (4) und Arbeitstätigkeiten (5) ausführen kann.

6. Auf elektronischem Datenaustausch basierendes Assistenzsystem (1) zur Befähigung eines autonomen Fahrzeuges (2) als autonome landwirtschaftliche Arbeitsmaschine (3) zu agieren nach Anspruch 5,
**dadurch gekennzeichnet, dass**
das Assistenzsystem (1) in einem Ergebnisdatensatz (65) dem autonomen Fahrzeug (2) Informationen (63) und Equipment (64) zuordnet die das autonome Fahrzeug (2) in eine autonome landwirtschaftliche Arbeitsmaschine (3) überführen.

7. Auf elektronischem Datenaustausch basierendes Assistenzsystem (1) zur Befähigung eines autonomen Fahrzeuges (2) als autonome landwirtschaftliche Arbeitsmaschine (3) zu agieren nach einem der Ansprüche 1 bis 3,
**dadurch gekennzeichnet, dass**
das Assistenzsystem (1) aus dem Einsatzplan (55) in einem Modul "Steuerung" (8) einen Ergebnisdatensatz (65) generiert, der Steuerungsdaten (68) umfasst, die die jeweilige autonome landwirtschaftliche Arbeitsmaschine (3) bei Umsetzung der ermittelten Fahrbewegungen (4) und Arbeitstätigkeiten (5) steuert.

8. Auf elektronischem Datenaustausch basierendes Assistenzsystem (1) zur Befähigung eines autonomen Fahrzeuges (2) als autonome landwirtschaftliche Arbeitsmaschine (3) zu agieren nach Anspruch 7,
**dadurch gekennzeichnet, dass**
der Ergebnisdatensatz (65) auf Basisdaten (9) beschränkt ist und die vollständige Steuerung der autonomen landwirtschaftlichen Arbeitsmaschine (3) zur Realisierung der Fahrbewegungen (4) und der Arbeitstätigkeiten (5) von der autonomen landwirtschaftlichen Arbeitsmaschine (3) selbst bewirkt wird.

9. Auf elektronischem Datenaustausch basierendes Assistenzsystem (1) zur Befähigung eines autonomen Fahrzeuges (2) als autonome landwirtschaftliche Arbeitsmaschine (3) zu agieren nach einem der vorhergehenden Ansprüche,
**dadurch gekennzeichnet, dass**
die von der mindestens einen oder den mehreren autonomen landwirtschaftlichen Arbeitsmaschinen (3) und/oder einem Auftraggeber (57) angeforderte externe Service-Dienstleistung (71) eine von der jeweiligen landwirtschaftlichen Arbeitsmaschine (36) entfernte Fernüberwachungs- und/oder Fernsteuerungsdienstleistung (71) ist, welche nach Anforderung freigeschaltet wird und die eingerichtet ist, die Fernüberwachung und/oder Fernsteuerung der mindestens einen oder der mehreren autonomen landwirtschaftlichen Arbeitsmaschinen (3) vorzunehmen.

10. Auf elektronischem Datenaustausch basierendes Assistenzsystem (1) zur Befähigung eines autonomen Fahrzeuges (2) als autonome landwirtschaftliche Arbeitsmaschine (3) zu agieren nach einem der vorhergehenden Ansprüche,
**dadurch gekennzeichnet, dass**
die mittels der Fernüberwachungs- und/oder Fernsteuerungsdienstleistung (71) zu überwachende und/oder zu steuernde zumindest eine landwirtschaftliche Arbeitsmaschine (36) über Mittel verfügt, vorzugsweise zumindest eine Datenverarbeitungseinrichtung (14a..n), eine Datensendeeinrichtung(15a..n) und eine Datenempfangseinrichtung (16a..n) zum Übertragen von Maschinendaten und/oder Umfelddaten in regelmäßigen oder unregelmäßigen zeitlichen Abständen oder in Echtzeit an eine einem Server (12) zugeordnete Datenbank (18), wobei die Maschinendaten und/oder Umfelddaten in der Datenbank (18) gesammelt und der jeweiligen autonomen landwirtschaftlichen Arbeitsmaschine (3) zugeordnet und mit weiteren verfügbaren Daten aus der unmittelbaren Umgebung der autonomen landwirtschaftlichen Arbeitsmaschine (3) verknüpft werden, wobei die in der Datenbank (18) des Servers (12) hinterlegten Maschinendaten und/oder Umfelddaten so strukturiert sind, dass das Assistenzsystem (1) jederzeit auf die jeweilige autonome landwirtschaftliche Arbeitsmaschine (3) zugreifen und deren Steuerung übernehmen kann.

11. Auf elektronischem Datenaustausch basierendes Assistenzsystem (1) zur Befähigung eines autonomen Fahrzeuges (2) als autonome landwirtschaftliche Arbeitsmaschine (3) zu agieren nach einem der vorhergehenden Ansprüche,
**dadurch gekennzeichnet, dass**
die Fernüberwachungs- und/oder Fernsteuerungsdienstleistung (71) einen Geo-Fence-Datensatz (72) bereitstellt, und die Anwendung des Geo-Fence-Datensatz (72) durch die eine oder die mehreren autonomen landwirtschaftlichen Arbeitsmaschinen (3) bewirkt, dass die Bewegung der zumindest einen oder der mehreren autonomen landwirtschaftlichen Arbeitsmaschinen (3) auf das zu bearbeitende Territorium (66) begrenzt ist.

12. Auf elektronischem Datenaustausch basierendes Assistenzsystem (1) zur Befähigung eines autonomen Fahrzeuges (2) als autonome landwirtschaftliche Arbeitsmaschine (3) zu agieren nach einem der vorhergehenden Ansprüche,
**dadurch gekennzeichnet, dass**
das Assistenzsystem (1) die eine oder mehreren autonomen landwirtschaftlichen Arbeitsmaschinen (3) einem Hauptprozess (73) als Unterstützer (74) zuordnet, wobei das Assistenzsystem (1) den Bedarf an Unterstützung in einem Umfeld der einen oder mehreren autonomen landwirtschaftlichen Arbeitsmaschinen (3) ermittelt und den verfügbaren autonomen landwirtschaftlichen Arbeitsmaschinen (3) in Abhängigkeit vom identifizierten Bedarf Aufträge zuordnet.

13. Auf elektronischem Datenaustausch basierendes Assistenzsystem (1) zur Befähigung eines autonomen Fahrzeuges (2) als autonome landwirtschaftliche Arbeitsmaschine (3) zu agieren nach einem der vorhergehenden Ansprüche,
**dadurch gekennzeichnet, dass**
das der Auftraggeber (Nutzer) (57) für das Buchen der Fernüberwachungs- und/oder Fernsteuerungsdienstleistung (71) eine Nutzungsgebühr (76) entrichtet.

## Claims

1. An assistance system (1) based on electronic data exchange for enabling an autonomous vehicle (2) to act as an autonomous agricultural working machine (3),
the assistance system (1) being configured to plan the deployment of at least one autonomous vehicle (2), to transmit the information required for the deployment to the autonomous vehicle (2), to at least partially control the autonomous vehicle (2) during working operation, and to monitor the working operation of the autonomous vehicle (2),
wherein a customer-specific deployment plan (55) is transferred to the assistance system (1), wherein the customer-specific deployment plan (55) describes a service (56) to be provided at least in terms of type and scope,
wherein, in a "monitoring" module (10), the assistance system (1) monitors the travelling movement (4) and operational activity (5) of the one or several autonomous agricultural working machines (3) and intervenes in the control of the respective autonomous agricultural working machine (3) upon the identification of critical situations,
**characterized in that**
at least the monitoring of the travelling movement (4) and the operational activity (5) of the one or several autonomous agricultural working machines (3) is brought about by automated booking (70) of an appropriate external service (71) for the one or several autonomous agricultural working machines (3).

2. The assistance system (1) based on electronic data exchange for enabling an autonomous vehicle (2) to act as an autonomous agricultural working machine (3) according to claim 1, **characterized in that**
the assistance system (1) comprises one or several data processing devices (14a..n), data receiving devices (16a..n) and data transmitting devices (15a..n), wherein the data processing devices (14a..n), the data receiving devices (16a..n) and the data transmitting devices (15a..n) are assigned to one or several autonomous vehicles (2) and an external server (12).

3. The assistance system (1) based on electronic data exchange for enabling an autonomous vehicle (2) to act as an autonomous agricultural working machine (3) according to claim 2, **characterized in that**
the external server (12) is configured as a data cloud (13).

4. The assistance system (1) based on electronic data exchange for enabling an autonomous vehicle (2) to act as an autonomous agricultural working machine (3) according to one of the preceding claims,
**characterized in that**
in a "deployment planning" module (6), in a result step (58), the assistance system (1) determines a required number of autonomous vehicles (2) from the deployment plan (55) and instigates their deployment.

5. The assistance system (1) based on electronic data exchange for enabling an autonomous vehicle (2) to act as an autonomous agricultural working machine (3) according to claim 4, **characterized in that**
in a "required information" module (7), in a result step (62), the assistance system (1) assigns information (63) and equipment (64) from the deployment plan (55) to the autonomous vehicle (2) so that the autonomous vehicle (2) can execute travelling movements (4) and operational activities (5) derived from the customer-specific deployment plan (55).

6. The assistance system (1) based on electronic data exchange for enabling an autonomous vehicle (2) to act as an autonomous agricultural working machine (3) according to claim 5, **characterized in that**
in a result data set (65), the assistance system (1) assigns information (63) and equipment (64) to the autonomous vehicle (2) which convert the autonomous vehicle (2) into an autonomous agricultural working machine (3).

7. The assistance system (1) based on electronic data exchange for enabling an autonomous vehicle (2) to act as an autonomous agricultural working machine (3) according to one of claims 1 to 3,
**characterized in that**
in a "control" module (8), the assistance system (1) generates a result data set (65) from the deployment plan (55), the result data set comprising control data (68) which controls the respective autonomous agricultural working machine (3) upon the implementation of the determined travelling movements (4) and operational activities (5).

8. The assistance system (1) based on electronic data exchange for enabling an autonomous vehicle (2) to act as an autonomous agricultural working machine (3) according to claim 7, **characterized in that**
the result data set (65) is limited to basic data (9) and the complete control of the autonomous agricultural working machine (3) for executing the travelling movements (4) and the operational activities (5) is brought about by the autonomous agricultural working machine (3) itself.

9. The assistance system (1) based on electronic data exchange for enabling an autonomous vehicle (2) to act as an autonomous agricultural working machine (3) according to one of the preceding claims,
**characterized in that**
the external service (71) requested by the at least one or more autonomous agricultural working machines (3) and/or a customer (57) is a remote monitoring and/or remote control service (71) which is remote from the respective agricultural working machine (36), which is activated upon request and which is configured to undertake the remote monitoring and/or remote control of the at least one or more autonomous agricultural working machines (3).

10. The assistance system (1) based on electronic data exchange for enabling an autonomous vehicle (2) to act as an autonomous agricultural working machine (3) according to one of the preceding claims,
**characterized in that**
the at least one agricultural working machine (36) to be monitored and/or controlled by means of the remote monitoring and/or remote control service (71) possesses means, preferably at least a data processing device (14a..n), a data transmitting device (15a..n) and a data receiving device (16a..n) for transmitting machine data and/or environmental data at regular or irregular time intervals or in real time to a database (18) assigned to a server (12), wherein the machine data and/or environmental data are collected in the database (18) and assigned to the respective autonomous agricultural working machine (3) and linked to further available data from the immediate environment of the autonomous agricultural working machine (3), wherein the machine data and/or environmental data stored in the database (18) of the server (12) are structured such that the assistance system (1) can access the respective autonomous agricultural working machine (3) at any time and assume control thereof.

11. The assistance system (1) based on electronic data exchange for enabling an autonomous vehicle (2) to act as an autonomous agricultural working machine (3) according to one of the preceding claims,
**characterized in that**
the remote monitoring and/or remote control service (71) provides a geofence data set (72), and the use of the geofence data set (72) by the one or the several autonomous agricultural working machines (3) causes the movement of the at least one or the several autonomous agricultural working machines (3) to be limited to the territory (66) to be processed.

12. The assistance system (1) based on electronic data exchange for enabling an autonomous vehicle (2) to act as an autonomous agricultural working machine (3) according to one of the preceding claims,
**characterized in that**
the assistance system (1) assigns the one or several autonomous agricultural working machines (3) to a main process (73) as a supporter (74), wherein the assistance system (1) determines the demand for support in an environment of the one or several autonomous agricultural working machines (3) and assigns tasks to the available autonomous agricultural working machines (3) as a function of the identified demand.

13. The assistance system (1) based on electronic data exchange for enabling an autonomous vehicle (2) to act as an autonomous agricultural working machine (3) according to one of the preceding claims,
**characterized in that**
the customer (user) (57) pays a user fee (76) for booking the remote monitoring and/or remote control service (71).

## Revendications

1. Système d'assistance (1) basé sur l'échange électronique de données, destiné à permettre à un véhicule autonome (2) d'agir en tant que machine agricole autonome (3),
le système d'assistance (1) étant conçu pour planifier les opérations d'au moins un véhicule autonome (2), transmettre au véhicule autonome (2) les informations nécessaires aux opérations, commander au moins partiellement le véhicule autonome (2) lors du processus de travail et surveiller le processus de travail du véhicule autonome (2),
un plan d'opérations (55) spécifique en fonction du client étant transmis au système d'assistance (1), le plan d'opérations (55) spécifique en fonction du client décrivant une prestation de service (56) à fournir, au moins en termes de type et d'étendue,
le système d'assistance (1) surveillant, dans un module « surveillance » (10), le mouvement de déplacement (4) et les tâches de travail (5) de la ou des machines agricoles autonomes (3) et, en cas d'identification de situations critiques, intervenant dans la commande de la machine agricole autonome (3) respective,
**caractérisé en ce que**
au moins la surveillance du mouvement de déplacement (4) et des tâches de travail (5) de la ou des machines agricoles autonomes (3) est déclenchée par la réservation (70) automatisée d'une prestation de service (70) externe correspondante pour la ou les machines agricoles autonomes (3).

2. Système d'assistance (1) basé sur l'échange électronique de données, destiné à permettre à un véhicule autonome (2) d'agir en tant que machine agricole autonome (3), selon la revendication 1, **caractérisé en ce que** le système d'assistance (1) comprend un ou plusieurs dispositifs de traitement de données (14a..n), dispositifs de réception de données (16a..n) et dispositifs d'émission de données (15a..n), où les dispositifs de traitement de données (14a..n), les dispositifs de réception de données (16a..n) et les dispositifs d'émission de données (15a..n) sont associés à un ou plusieurs véhicules autonomes (2) et à un serveur (12) externe.

3. Système d'assistance (1) basé sur l'échange électronique de données, destiné à permettre à un véhicule autonome (2) d'agir en tant que machine agricole autonome (3), selon la revendication 2, **caractérisé en ce que** le serveur (12) externe est réalisé sous forme de nuage de données (13).

4. Système d'assistance (1) basé sur l'échange électronique de données, destiné à permettre à un véhicule autonome (2) d'agir en tant que machine agricole autonome (3), selon une des revendications précédentes, **caractérisé en ce que** le système d'assistance (1) détermine à partir du plan d'opérations (55), dans un module « planification des opérations » (6), à une étape de résultat (58), un nombre nécessaire de véhicules autonomes (2), ainsi que leur mise à disposition.

5. Système d'assistance (1) basé sur l'échange électronique de données, destiné à permettre à un véhicule autonome (2) d'agir en tant que machine agricole autonome (3), selon la revendication 4, **caractérisé en ce que** le système d'assistance (1) associe à partir du plan d'opérations (55), dans un module « informations nécessaires » (7), à une étape de résultat (62), des informations (63) et des équipements (64) au véhicule autonome (2), de sorte que le véhicule autonome (2) peut effectuer des mouvements de déplacement (4) et des tâches de travail (5) déduits du plan d'opérations (55) spécifique en fonction du client.

6. Système d'assistance (1) basé sur l'échange électronique de données, destiné à permettre à un véhicule autonome (2) d'agir en tant que machine agricole autonome (3), selon la revendication 5, **caractérisé en ce que** le système d'assistance (1) associe au véhicule autonome (2), dans un ensemble de données de résultat (65), des informations (63) et des équipements (64) qui font du véhicule autonome (2) une machine agricole autonome (3).

7. Système d'assistance (1) basé sur l'échange électronique de données, destiné à permettre à un véhicule autonome (2) d'agir en tant que machine agricole autonome (3), selon une des revendications 1 à 3, **caractérisé en ce que** le système d'assistance (1) génère à partir du plan d'opérations (55), dans un module « commande » (8), un ensemble de données de résultat (65) comprenant des données de commande (68) qui commandent la machine agricole autonome (3) respective lors de la mise en œuvre des mouvements de déplacement (4) et des tâches de travail (5) déterminés.

8. Système d'assistance (1) basé sur l'échange électronique de données, destiné à permettre à un véhicule autonome (2) d'agir en tant que machine agricole autonome (3), selon la revendication 7, **caractérisé en ce que** l'ensemble de données de résultat (65) est limité à des données de base (9), et la commande complète de la machine agricole autonome (3), aux fins de réalisation des mouvements de déplacement (4) et des tâches de travail (5), est initiée par la machine agricole autonome (3) elle-même.

9. Système d'assistance (1) basé sur l'échange électronique de données, destiné à permettre à un véhicule autonome (2) d'agir en tant que machine agricole autonome (3), selon une des revendications précédentes, **caractérisé en ce que** la prestation de service (72) externe demandée par la machine agricole autonome, au nombre d'au moins une, ou la pluralité de machines agricoles autonomes (3) et/ou un donneur d'ordre (57) est une prestation de télésurveillance et/ou de télécommande (71) qui est située à distance de la machine agricole autonome (3) respective, est activée sur demande et est conçue pour réaliser la télésurveillance et/ou la télécommande de la machine agricole autonome (3), au nombre d'au moins une, ou de la pluralité de machines.

10. Système d'assistance (1) basé sur l'échange électronique de données, destiné à permettre à un véhicule autonome (2) d'agir en tant que machine agricole autonome (3), selon une des revendications précédentes, **caractérisé en ce que** la machine agricole autonome (3), au nombre d'au moins une, devant être surveillée et/ou commandée par le biais de la prestation de télésurveillance et/ou de télécommande (71), dispose de moyens, de préférence d'au moins un dispositif de traitement de données (14a..n), un dispositif d'émission de données (15a..n) et un dispositif de réception de données (16a..n), destinés à la transmission de données machine et/ou de données de l'environnement, à intervalles de temps réguliers ou irréguliers, ou en temps réel, à une base de données (18) associée au serveur (12), les données machine et/ou les données de l'environnement étant collectées dans la base de données (18) et associées à la machine agricole autonome (3) respective, et étant combinées avec d'autres données disponibles provenant de l'environnement direct de la machine agricole autonome (3), sachant que les données machine et/ou les données de l'environnement enregistrées dans la base de données (18) du serveur (12) sont structurées de manière à ce que le système d'assistance (1) puisse accéder à tout moment à la machine agricole autonome (3) respective et en assurer la commande.

11. Système d'assistance (1) basé sur l'échange électronique de données, destiné à permettre à un véhicule autonome (2) d'agir en tant que machine agricole autonome (3), selon une des revendications précédentes, **caractérisé en ce que** la prestation de télésurveillance et/ou de télécommande (71) fournit un ensemble de données de délimitation géographique, et que l'application de l'ensemble de données de délimitation géographique par la ou les machines agricoles autonomes (3) a pour effet que le mouvement de la machine agricole autonome (3), au nombre d'au moins une, ou de la pluralité de machines est limité au terrain (66) à travailler.

12. Système d'assistance (1) basé sur l'échange électronique de données, destiné à permettre à un véhicule autonome (2) d'agir en tant que machine agricole autonome (3), selon une des revendications précédentes, **caractérisé en ce que** le système d'assistance (1) associe la ou les machines agricoles autonomes (3) à un processus principal (73) en tant qu'assistant (74), où le système d'assistance (1) détermine les besoins en assistance dans une zone environnante de la ou des machines agricoles autonomes (3) et associe des instructions aux machines agricoles autonomes (3) disponibles, en fonction des besoins identifiés.

13. Système d'assistance (1) basé sur l'échange électronique de données, destiné à permettre à un véhicule autonome (2) d'agir en tant que machine agricole autonome (3), selon une des revendications précédentes, **caractérisé en ce que** le donneur d'ordre (utilisateur) (57) règle des frais d'utilisation (76) pour la réservation de la prestation de télésurveillance et/ou de télécommande (71).
